# FASCICULE DE BREVET EUROPEEN

(11) **EP 1 712 408 B1**
(45) Date de publication et mention de la délivrance du brevet: **18.06.2008**
(21) Numéro de dépôt: 06290600.3
(22) Date de dépôt: 12.04.2006
(51) Int. Cl.: B60N 2/48

(54) **Appui-tête réglabe en hauteur et comprenant un élément de support unique**
In Höhe verstellbare Kopfstütze mit einem einzigen Trägerelement.
Height adjustable headrest with a single support element.

(30) Priorité: 15.04.2005 FR 0503809
(43) Date de publication de la demande: 18.10.2006
(73) Titulaire: CENTRE D'ETUDE ET RECHERCHE POUR L'AUTOMOBILE ( CERA), 51100 Reims (FR)
(72) Inventeur: Le Gall, François, 02130 Coulonges (FR); Tarallo, Jean-Michel, 75016 Paris (FR)
(74) Mandataire: Sayettat, Julien Christian

(56) Documents cités:
- DE-A1- 10 157 516
- DE-A1- 19 731 059
- DE-A1- 19 830 753
- DE-A1- 19 947 621
- DE-A1-9102004 002 20
- DE-B3- 10 346 402

## Description

L'invention concerne un appui-tête pour siège de véhicule automobile, ainsi qu'un siège de véhicule automobile comprenant un tel appui-tête.

II est connu de réaliser des appuis-tête solidaire du dossier et réglable en hauteur par rapport à celui-ci. De tels appuis-tête comprennent un corps en mousse monté sur une armature.

Selon une réalisation classique, l'armature peut comprendre deux broches, formant élément de support de l'appui-tête, saillant sous l'appui-tête et s'engageant dans des douilles complémentaires prévues dans la partie supérieure du dossier. Une telle réalisation est cependant peu esthétique et ne permet pas d'amener des organes du véhicule tels qu'un écran prévu sur la face arrière de l'appui-tête sans que la connectique de cet écran soit masquée sous l'appui-tête.

Selon une autre réalisation, l'armature comprend un élément de support unique sous la forme d'un mât s'engageant dans la partie supérieure du dossier. Le mât est généralement plein, ce qui ne permet pas d'amener la connectique de l'écran de façon masquée sous l'appui-tête. D'autre part, le réglage en hauteur de l'appui-tête se fait au moyen de crans prévus dans le mât et coopérant avec un organe de blocage solidaire du dossier. Dans ce cas, le réglage de la hauteur de l'appui-tête se fait par un bouton prévu sur le dossier. Cependant, la disposition du bouton n'est pas ergonomique car celui-ci est difficilement accessible à l'occupant du siège lorsqu'il est assis dessus.

L'invention vise à pallier ces inconvénients en proposant un appui-tête particulièrement esthétique comprenant un élément de support unique dans lequel des organes du véhicule peuvent passer afin d'être invisibles depuis l'extérieur de l'appui-tête et dont la hauteur est réglée au moyen d'un bouton disposé de façon ergonomique et facilement accessible à l'occupant du siège.

A cet effet et selon un premier aspect, l'invention concerne un appui-tête pour siège de véhicule automobile selon la revendication 1.

On connaît par ailleurs du document DE-197 31 059 un appui-tête selon le préambule de la revendication 1, dans lequel deux broches sont prévues pour être montées dans respectivement un évidement.

Ainsi, les moyens de blocage réversibles de la translation sont disposés dans l'appui-tête et non pas dans le dossier, ce qui permet de prévoir un réglage de la hauteur de l'appui-tête accessible facilement pour l'occupant du siège.

Selon une réalisation particulière, l'élément de support est disposé dans un boîtier, des espaces étant prévus entre l'élément de support et le boîtier de sorte à permettre de faire passer des organes fonctionnels du véhicule dans lesdits espaces.

Ainsi, les organes peuvent être invisibles depuis l'extérieur de l'appui-tête. Notamment les câbles de connectique d'un écran prévu dans la face arrière de l'appui-tête peuvent passer dans les espaces prévus et non pas à l'extérieur de l'appui-tête.

Selon un deuxième aspect, l'invention concerne un siège de véhicule automobile comprenant un dossier et une assise, ledit siège comprenant un appui-tête tel que décrit ci-dessus, le dossier comprenant des moyens de retenue réversibles de l'appui-tête, lesdits moyens coopérant de façon réversible avec les moyens de fixation réversibles de l'appui-tête au dit dossier.

D'autres objets et avantages de l'invention apparaîtront au cours de la description qui suit, faite en référence aux dessins annexés.

La figure 1 est une représentation schématique de face d'un appui-tête selon l'invention associé à un dossier de véhicule automobile.

La figure 2 est une représentation schématique partielle en perspective de la structure interne de l'appui-tête.

La figure 3 est une représentation schématique partielle en perspective de la structure interne de l'appui-tête associé à l'armature du dossier d'un siège de véhicule automobile.

La figure 4 est une représentation schématique partielle de la structure interne de l'appui-tête montrant les moyens de fixation réversibles au dossier du siège.

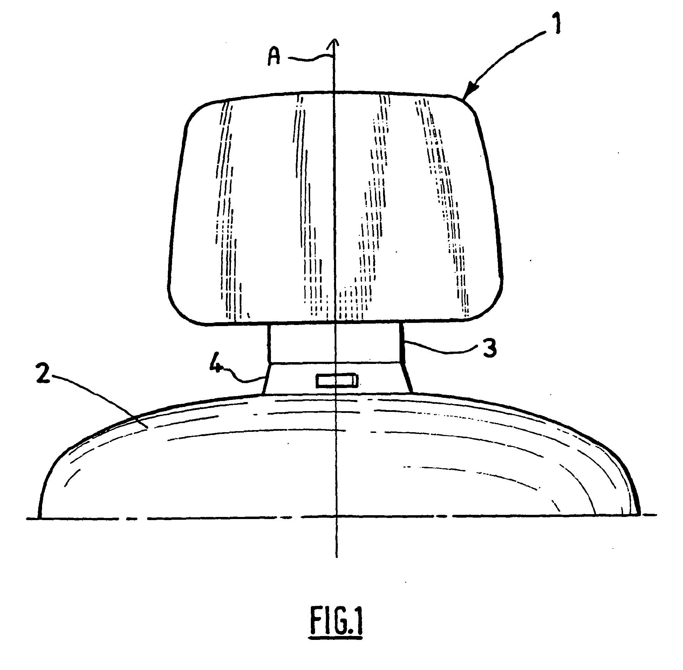

En référence à la figure 1, on décrit un appui-tête 1 destiné à être associé au dossier 2 d'un siège de véhicule automobile. A cet effet, l'appui-tête 1 comprend un élément de support 3 comprenant des moyens de fixation réversibles 4 au dossier 2. L'appui-tête 1 comprend en outre un corps en mousse formant la surface d'appui de la tête pour l'occupant du siège.

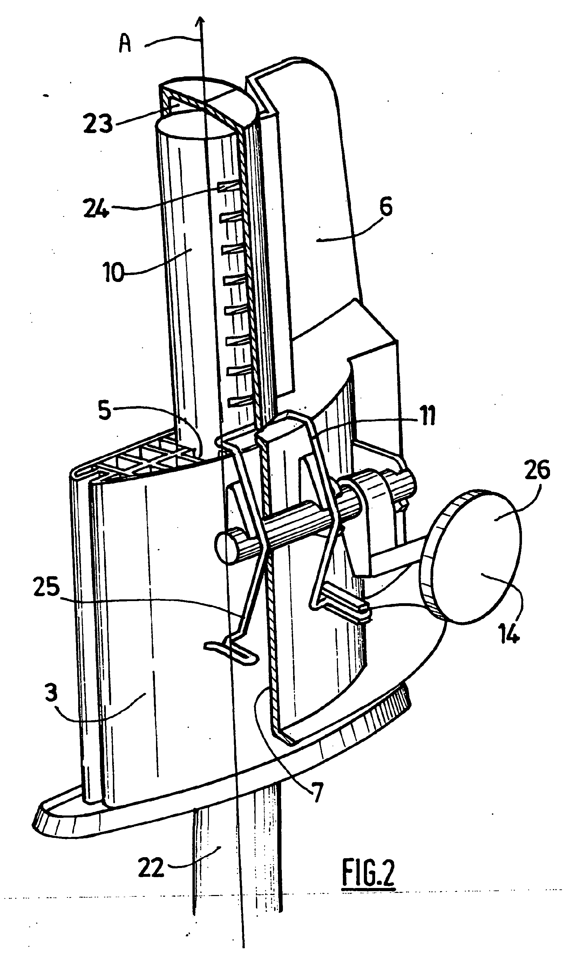

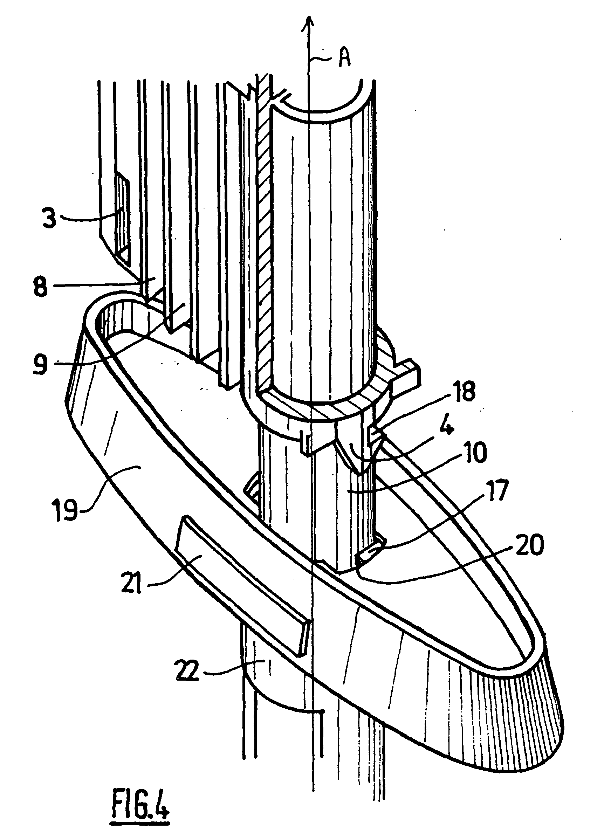

L'élément de support 3 forme un « mât » unique s'étendant sous l'appui-tête 1. L'élément de support 3 comprend une pièce monobloc 8, par exemple en matériau plastique injecté et un boîtier entourant ladite pièce monobloc. Comme représenté sur la figure 4, la pièce monobloc est agencée pour qu'il y ait des espaces entre le boîtier et la pièce monobloc. A cet effet, la pièce monobloc 8 présente par exemple des nervures 9. Les espaces permettent de faire passer de faire passer des organes fonctionnels du véhicule vers l'appui-tête du véhicule tels que la connectique d'un écran prévu sur la face arrière de l'appui-tête 1 par exemple. La pièce monobloc 8 comprend un évidement 5 s'étendant selon un axe A sensiblement longitudinal comme représenté sur la figure 2. L'évidement 5 traverse l'élément de support 3 sensiblement dans sa partie centrale.

Une broche 10 s'étend sensiblement longitudinalement à l'intérieur de l'évidemment 5. La broche 10 est solidaire de l'élément de support 3 et saille selon l'axe A au-dessus celui-ci. La broche 10 peut présenter une longueur agencée pour que la broche 10 pénètre dans le dossier 2 lorsque l'appui-tête 1 est dans une position basse de réglage. Une telle longueur permet de prévoir une plage de réglage en hauteur importante de l'appui-tête 1, comme représenté sur la figure 2.

Le boîtier est la seule partie de l'élément de support 3 visible de l'extérieur de l'appui-tête 1, ce qui permet de conférer une bonne esthétique à celui-ci, comme représenté sur la figure 1.

Un carter 6 est monté en translation longitudinale par rapport à l'élément de support 3 et à la broche 10. La translation se fait selon l'axe A. A cet effet, le carter 6 définit un premier logement 7 présentant une forme sensiblement complémentaire de celle de l'élément de support 3 et dans lequel l'élément de support 3 est disposé. Le carter 6 définit en outre un deuxième logement 23 dans lequel la broche 10 est disposée. A cet effet, le premier logement 7 du carter 6 présente une forme sensiblement complémentaire de celle de l'élément de support 3 et le deuxième logement 23 présente une forme sensiblement complémentaire de celle de la broche 10. Le corps en mousse est disposé autour du carter 6. Pour des raisons de simplicité, le corps en mousse n'est pas représenté sur les figures 2 à 4.

L'appui-tête 1 comprend en outre des moyens de blocage réversibles 11 de la translation du carter 6 par rapport à l'élément de support 3 et/ou par rapport à la broche 10. L'appui-tête 1 comprend également un moyen de désengagement 14 des moyens de blocage 11 de sorte à libérer la translation du carter 6 par rapport à l'élément de support 3 et/ou par rapport à la broche 10.

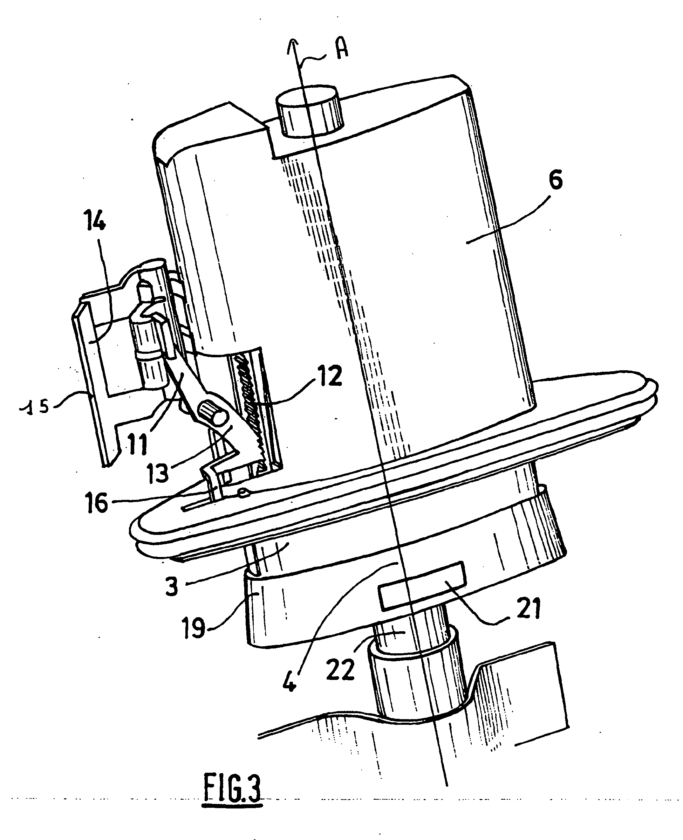

Selon la réalisation représentée sur la figure 3, les moyens de blocage réversibles 11 de la translation du carter 6 par rapport à l'élément de support 3 comprennent une crémaillère 12 solidaire de l'élément de support 3 et s'étendant selon une direction sensiblement parallèle à l'axe A. La crémaillère 12 est par exemple fixée sur un des bords de la pièce monobloc 8, comme représenté sur la figure 3. La longueur de la crémaillère 12 définit la plage de réglage en hauteur de l'appui-tête. Les moyens de blocage 11 comprennent en outre une pièce de coopération 13 avec la crémaillère 12. La pièce 13 est solidaire du carter 6 et est mobile en rotation entre une position de réglage, dans laquelle elle est écartée de la crémaillère 12 et permet la translation du carter 6 par rapport à l'élément de support 3 de sorte à permettre le réglage en hauteur de l'appui-tête 1, et une position de blocage, dans laquelle elle coopère avec la crémaillère 12 et bloque la translation du carter 6 par rapport à l'élément de support 3 de sorte à fixer la hauteur de l'appui-tête 1.

La rotation de la pièce de coopération 13 est commandée par un bouton 15 formant moyen de désengagement 14 des moyens de blocage 11. Le bouton 15 disposé à proximité de la paroi externe du corps en mousse. Le bouton 15 peut être disposé sous la coiffe (non représentée) du corps en mousse afin d'améliorer encore l'esthétisme de l'appui-tête. Selon une réalisation, la coiffe comprend un pictogramme en relief en regard du bouton 15 afin d'indiquer sa position à l'occupant du siège. Le bouton 15 est disposé à un endroit facilement accessible à la main de l'occupant du siège lorsque celui-ci est assis. A cet effet, on prévoit par exemple de disposer le bouton sur l'un des côtés de l'appui-tête comme représenté sur la figure. Le bouton 15 est agencé pour entraîner la rotation de la pièce de coopération 13 vers sa position de réglage lorsqu'il est actionné. Les moyens de blocage 11 de la translation du carter 6 par rapport à l'élément de support 3 comprennent en outre un moyen de rappel (non représenté) de la pièce 13 dans sa position de blocage lorsque le bouton 15 n'est pas actionné. Ce moyen de rappel est par exemple un ressort monté autour de l'axe de rotation de la pièce 13. Ainsi, pour régler la hauteur de l'appui-tête 1, l'occupant du siège appuie sur le bouton 15 puis choisi la hauteur d'appui-tête qu'il désire, lorsque le réglage lui convient, il relâche le bouton et la pièce 13 vient en prise avec la crémaillère 12, bloquant ainsi la translation du carter 6 par rapport à l'élément de support 3 et fixant la hauteur de l'appui-tête.

Selon une réalisation, la pièce 13 est en outre mobile vers une position de montage dans laquelle elle est écartée de la crémaillère 12 et peut descendre plus bas que celle-ci de sorte à amener l'appui-tête 1 vers une position basse extrême de montage dans le véhicule. Cette position permet de faire descendre l'appui-tête 1 plus bas que sa hauteur minimale de sécurité lorsque l'appui-tête 1 est utilisé. Cette position facilite le montage de l'appui-tête 1 dans le véhicule automobile. Le passage dans cette position n'est pas commandé par le bouton 15 car l'occupant du siège ne doit pas pouvoir faire descendre l'appui-tête plus bas que la hauteur minimale de sécurité. Un autre bouton 16 solidaire de la pièce de coopération 13, disposé par exemple sous l'appui-tête comme représenté sur la figure 3, commande le passage à la position de montage. Ce bouton 16 est utilisé uniquement lors du montage ou du démontage de l'appui-tête 1.

Selon la réalisation représentée sur la figure 2, les moyens de blocage 11 de la translation du carter 6 par rapport à la broche 10 comprennent des crans 24 prévus dans la broche 10 et une pièce de blocage 25 solidaire du carter. La pièce 25 coopère avec les crans 24. La pièce 25 est mobile en rotation entre une position de réglage dans laquelle elle est écartée des crans 24 de sorte à permettre le réglage en hauteur de l'appui-tête, et une position de blocage, dans laquelle elle coopère avec un cran 24 et bloque la translation du carter 6 par rapport à la broche 10 de sorte à fixer la hauteur de l'appui-tête. Les crans 24 sont répartis sur la hauteur de la broche 10. Ainsi, chaque cran 24 définit une hauteur de réglage de l'appui-tête.

Le moyen de désengagement 14 des moyens de blocage 11 comprend un bouton 26 disposé à proximité de la paroi externe du corps en mousse. Le bouton 26 est agencé pour entraîner la rotation de la pièce de blocage 25 vers sa position de réglage lorsqu'il est actionné. La pièce de blocage 25 est élastique et mise en contrainte contre le carter 6 de sorte à revenir dans sa position de blocage lorsque le bouton 26 n'est pas actionné. Le bouton 26 présente par exemple les mêmes caractéristiques que le bouton 15.

Selon d'autres réalisations, les moyens de blocage 11 de la broche 10 peuvent être des moyens de blocage classiques d'une broche dans un appui-tête monté sur deux broches.

On décrit à présent un siège de véhicule automobile comprenant un dossier 2 et une assise ainsi qu'un appui-tête tel que décrit ci-dessus.

Le dossier 2 comprend des moyens de retenue réversibles 17 de l'appui-tête 1. Ces moyens 17 coopèrent de façon réversible avec les moyens de fixation réversibles 4 de l'appui-tête 1 au dossier 2.

Selon la réalisation représentée sur la figure 5, les moyens de fixation 4 comprennent au moins une patte 18 solidaire de l'élément de support 3 et s'étendant sensiblement longitudinalement sous cet élément. La patte 18 est par exemple formée d'une seule pièce avec la pièce monobloc 8 à proximité de l'évidement 5. Selon une réalisation, les moyens de fixation 4 comprennent deux pattes 18 disposées de part et d'autre de l'évidement 5. La patte 18 coopère de façon réversible avec les moyens de retenue 17 du dossier 2.

Selon une réalisation non représentée, l'élément de support 3 comprend un bouton solidaire de la patte 18. Ce bouton est agencé pour dégager la patte 18 des moyens de retenue 5 du dossier 2 afin de désolidariser l'appui-tête 1 du dossier 2. Dans ce cas, les moyens de retenue 5 comprennent un rebord prévu dans la partie supérieure du dossier 2 et derrière lequel la patte 18 s'engage lorsque l'appui-tête 1 est fixé au dossier 2. Le bouton saille hors du boîtier de sorte à être accessible de l'extérieur de l'appui-tête 1. Selon la réalisation où deux pattes 18 sont prévues, deux boutons actionnant chacun une patte 18 peuvent être prévus.

Selon une autre réalisation, représentée sur les figures, les moyens de retenue 17 comprennent un socle 19 prévu dans la partie supérieure du dossier 2. L'élément de support 3 est alors disposé dans le socle 19 lorsque l'appui-tête est solidaire du dossier 2. Le socle comprend une pièce de retenue 20 mobile en translation entre une position de retenue dans laquelle la pièce 20 coopère avec la patte 18 de sorte à fixer l'appui-tête 1 au dossier 2 et une position de libération dans laquelle la pièce 20 est écartée de la patte 18 de sorte à désolidariser l'appui-tête 1 du dossier 2. La pièce de retenue 20 est actionnée par un bouton 21 prévu dans le socle 19 et agencé pour placer la pièce de retenue 20 dans sa position de libération. Un moyen de contrainte (non représenté) est alors prévu pour ramener la pièce dans sa position de retenue lorsque le bouton n'est pas sollicité.

Afin que l'appui-tête soit fermement maintenu par rapport au dossier 2, notamment en cas de choc, un élément tubulaire 22 solidaire de l'élément de support 3 et plongeant dans le dossier 2 peut être prévu, comme représenté sur les figures. L'élément tubulaire 22 est par exemple associé de façon réversible à l'armature du dossier 2. On évite ainsi que l'appui-tête 1 puisse s'éjecter en cas de choc.

## Revendications

1. Appui-tête pour siège de véhicule automobile comprenant un élément de support (3), ledit élément comprenant des moyens de fixation réversibles (4) au dossier du siège, l'appui-tête (1) comprenant une broche (10) saillante selon un axe sensiblement longitudinal (A) au-dessus de l'élément support (3), l'appui-tête (1) comprenant en outre un carter (6) autour duquel un corps en mousse est disposé, le carter (6) définissant un premier logement (7) dans lequel l'élément de support (3) est disposé ledit carter étant monté en translation sur l'élément de support (3) selon un axe sensiblement parallèle à l'axe (A), ledit appui-tête étant **caractérisé en ce que** la broche (10) est solidaire de l'élément de support (3), le carter (6) définissant un deuxième logement (23) dans lequel la broche (10) est disposée, ledit carter étant monté en translation sur la broche (10) et ledit appui-tête comprenant en outre des moyens de blocage (11) de la translation du carter (6) par rapport à l'élément de support (3) et/ou du carter (6) par rapport à la broche (10), et **en ce que** les moyens de blocage (11) de la translation du carter (6) par rapport à l'élément de support (3) comprennent une crémaillère (12) solidaire de l'élément de support (3) et s'étendant selon une direction sensiblement parallèle à l'axe (A), les moyens de blocage (11) comprenant en outre une pièce de coopération (13) avec la crémaillère (12), ladite pièce étant solidaire du carter (6), ladite pièce étant mobile en rotation entre une position de réglage, dans laquelle elle est écartée de la crémaillère (12) et permet la translation du carter (6) par rapport à l'élément de support (3) de sorte à permettre le réglage en hauteur de l'appui-tête (1), et une position de blocage, dans laquelle elle coopère avec la crémaillère (12) et bloque la translation du carter (6) par rapport à l'élément de support (3) de sorte à fixer la hauteur de l'appui-tête (1), la longueur de la crémaillère (12) définissant la plage de réglage en hauteur de l'appui-tête (1).

2. Appui-tête selon la revendication 1, **caractérisé en ce qu'**il comprend en outre un moyen de désengagement (14) des moyens de blocage (11) de sorte à libérer la translation du carter (6) par rapport à l'élément de support (3) et à la broche (10).

3. Appui-tête selon la revendication 2, **caractérisé en ce que** le moyen de désengagement (14) des moyens de blocage (11) comprend un bouton (15) disposé à proximité de la paroi externe du corps en mousse, ledit bouton étant agencé pour entraîner la rotation de la pièce de coopération (13) vers sa position de réglage lorsqu'il est actionné, les moyens de blocage (11) de la translation du carter (6) par rapport à l'élément de support (3) comprenant en outre un moyen de rappel de la pièce (13) dans sa position de blocage lorsque le bouton (15) n'est pas actionné.

4. Appui-tête selon la revendication 2 ou 3, **caractérisé en ce que** la pièce (13) est en outre mobile vers une position de montage dans laquelle elle est écartée de la crémaillère (12) et peut descendre plus bas que celle-ci de sorte à amener l'appui-tête (1) vers une position basse extrême de montage.

5. Appui-tête selon l'une quelconque des revendications 1 à 4, **caractérisé en ce que** les moyens de blocage (11) de la translation du carter (6) par rapport à la broche (10) comprennent des crans (24) prévus dans la broche (10) et une pièce de blocage (25) coopérant avec lesdits crans, ladite pièce étant solidaire du carter (6) et mobile en rotation entre une position de réglage dans laquelle elle est écartée des crans (24) de sorte à permettre le réglage en hauteur de l'appui-tête (1), et une position de blocage, dans laquelle elle coopère avec un cran (24) et bloque la translation du carter (6) par rapport à la broche (10) de sorte à fixer la hauteur de l'appui-tête (1).

6. Appui-tête selon la revendication 5 lorsqu'elle dépend de la revendication 2, **caractérisé en ce que** le moyen de désengagement (14) des moyens de blocage (11) comprend un bouton (26) disposé à proximité de la paroi externe du corps en mousse, ledit bouton étant agencé pour entraîner la rotation de la pièce de blocage (25) vers sa position de réglage lorsqu'il est actionné, la pièce de blocage (25) étant élastique de sorte à revenir dans sa position de blocage lorsque le bouton (26) n'est pas actionné.

7. Appui-tête selon l'une quelconque des revendications 1 à 6, **caractérisé en ce que** le premier logement (7) du carter (6) présente une forme sensiblement complémentaire de celle de l'élément de support (3) et le deuxième logement (23) présente une forme sensiblement complémentaire de celle de la broche (10).

8. Appui-tête selon l'une quelconque des revendications 1 à 7, **caractérisé en ce que** l'élément de support (3) comprend une pièce monobloc (8) disposée dans un boîtier, des espaces étant prévus entre la pièce monobloc (8) et le boîtier de sorte à permettre de faire passer des organes fonctionnels du véhicule dans lesdits espaces.

9. Siège de véhicule automobile comprenant un dossier (2) et une assise, **caractérisé en ce qu'**il comprend un appui-tête (1) selon l'une quelconque des revendications 1 à 8, le dossier (2) comprenant des moyens de retenue (17) réversibles de l'appui-tête, lesdits moyens coopérant de façon réversible avec les moyens de fixation réversibles (4) de l'appui-tête (1) au dit dossier.

10. Siège selon la revendication 9, **caractérisé en ce que** les moyens de fixation (11) comprennent au moins une patte (18) solidaire de l'élément de support (3) et s'étendant sensiblement longitudinalement sous ledit élément, ladite patte (18) coopérant de façon réversible avec les moyens de retenue (17) du dossier.

11. Siège selon la revendication 10, **caractérisé en ce que** l'élément de support comprend un bouton solidaire de la patte (18), ledit bouton étant agencé pour dégager la patte (18) des moyens de retenue (17) du dossier (2) afin de désolidariser l'appui-tête (1) du dossier (2).

12. Siège selon la revendication 10, **caractérisé en ce que** les moyens de retenue (17) comprennent un socle (19) prévu dans la partie supérieure du dossier (2), l'élément de support (3) étant disposé dans ledit socle, ledit socle comprenant une pièce de retenue (20) mobile en translation entre une position de retenue dans laquelle ladite pièce coopère avec la patte (18) de sorte à fixer l'appui-tête (1) au dossier (2) et une position de libération dans laquelle ladite pièce est écartée de la patte (18) de sorte à désolidariser l'appui-tête (1) du dossier (2).

## Claims

1. Headrest for motor vehicle seat comprising a support member (3), said member comprising reversible fixing means (4) to the seat back of the seat, the headrest (1) comprising a protruding pin (10) according to a substantially longitudinal axis (A) above the support member (3), the headrest (1) further comprising a case (6) around which a foam body is arranged, the case (6) defining a first housing (7) wherein the support member (3) is arranged, said case being mounted to move in translation in the support member (3) according to a an axis substantially parallel to the axis (A), said headrest being **characterised in that** the pin (10) is attached to support member (3), the case (6) defining a second housing (23) wherein the pin (10) is arranged, said case being mounted to move in translation on the pin (10) and said headrest further comprising blocker means (11) of the translation of the case (6) in relation to the support member (3) and/or of the case (6) in relation to the pin (10), and **in that** the blocker means (11) of the translation of the case (6) in relation to the support member (3) include a rack (12) attached to support member (3) and extending according to a direction substantially parallel to the axis (A), blocker means (11) further comprising a cooperation part (13) with the rack (12), said part being attached to the case (6), said part being mobile in rotation between an adjustment position, wherein it is separated from the rack (12) and making the translation of the case (6) possible in relation to the support member (3) in such a way as to allow for the height adjustment of the headrest (1), and a blocking position, wherein it cooperates with the rack (12) and blocks the translation of the case (6) in relation to the support member (3) in such a way as to fix the height of the headrest (1), with the length of the rack (12) defining the height adjustment range of the headrest (1).

2. Headrest set forth in claim 1, **characterised in that** it further comprises a disengaging means (14) of the blocker means (11) so as to release the translation of the case (6) in relation to the support member (3) and to the pin (10).

3. Headrest set forth in claim 2, **characterised in that** the disengaging means (14) of the blocker means (11) comprises a button (15) arranged in the vicinity of the external wall of Lhe foam body, said button being arranged to drive the rotation of the cooperation part (13) towards the adjustment position therein when it is actuated, blocker means (11) of the translation of the case (6) in relation to the support member (3) further comprising a restoring means of the part (13) in the blocker position thereof when the button (15) is not actuated.

4. Headrest set forth in claim 2 or 3, **characterised in that** the part (13) is furthermore mobile to a mounting position wherein it is separated from the rack (12) and can descend lower than the latter in such a way as to bring the headrest (1) to an extreme lower mounting position.

5. Headrest as set forth in any of claims 1 to 4 **characterised in that** the blocker means (11) of the translation of the case (6) in relation to the pin (10) includes catches (24) provided in the pin (10) and a blocker part (25) cooperating with said catches, said part being attached to the case (6) and mobile in rotation between an adjustment position wherein it is separated from the catches (24) is such a way as to allow for the height adjustment of the headrest (1), and a blocking position, wherein it cooperates with a catch (24) and blocks the translation of the case (6) in relation to the pin (10) in such a way as to fix the height of the headrest (1).

6. Headrest set forth in claim 5 when it is dependent on claim 2, **characterised in that** the disengaging means (14) of the blocker means (11) comprises a button (26) arranged in the vicinity of the external wall of the foam body, said button being arranged drive the rotation of the blocker part (25) towards the adjustment position therein when it is actuated, the blocker part (25) being elastic in such a way as to return to the blocking position thereof when the button (26) is not actuated.

7. Headrest as set forth in any of claims 1 to 6, **characterised in that** the first housing (7) of the case (6) has a form that is substantially complementary to that of support member (3) and the second housing (23) has a form that is substantially complementary to that of the pin (10).

8. Headrest as set forth in any of claims 1 to 7, **characterised in that** the support member (3) comprises a one-piece part (8) arranged in a casing, with spaces being provided between the one-piece part (8) and the casing is such a way as to allow for the passing of the functional members of the vehicle in said spaces.

9. Motor vehicle seat comprising a seat back (2) and a seating part, **characterised in that** it comprises a headrest (1) as set forth in any of claims 1 to 8, the seat back (2) comprising reversible retaining means (17) of the headrest, said means cooperating reversibly with the reversible fixing means (4) of the headrest (1) to said seat back.

10. Seat set forth in claim 9, **characterised in that** the fixing means (11) include at least one prong (18) attached to the support member (3) and extending substantially longitudinally under said member, said prong (18) cooperating reversibly with the retaining means (17) of the seat back.

11. Seat set forth in claim 10, **characterised in that** the support member comprises a button attached to the prong (18), said button being arranged to disengage the prong (18) from retaining means (17) of the seat back (2) so as to separate the headrest (1) from the seat back (2).

12. Seat set forth in claim 10, **characterised in that** the retaining means (17) include a base (19) provided in the upper portion of the seat back (2), the support member (3) being arranged in said base, said base comprising a retaining part that is (20) mobile in translation between a retaining position wherein said part cooperates with the prong (18) in such a way as to fix the headrest (1) to the seat back (2) and a releasing position wherein said part is separated from the prong (18) in such a way as to separate the headrest (1) from the seat back (2).

## Patentansprüche

1. Kopfstütze für den Sitz eines Kraftfahrzeuges, umfassend ein Tragelement (3), wobei das Element reversible Mittel zur Befestigung (4) an der Lehne des Sitzes umfasst, wobei die Kopfstütze (1) des Weiteren einen Stift (10) umfasst, der gemäß einer im Wesentlichen längs verlaufenden Achse (A) über das Tragelement (3) vorragt, wobei die Kopfstütze (1) des Weiteren ein Gehäuse (6) umfasst, um welches herum ein Schaumkörper angeordnet ist, wobei das Gehäuse (6) eine erste Aufnahme (7) definiert, in welcher das Tragelement (3) angeordnet ist, wobei das Gehäuse auf dem Tragelement (3) gemäß einer Achse, die im Wesentlichen parallel zur Achse (A) verläuft, verschiebbar montiert ist, wobei die Kopfstütze **dadurch gekennzeichnet ist, dass** der Stift (10) mit dem Tragelement (3) fest verbunden ist, wobei das Gehäuse (6) eine zweite Aufnahme (23) definiert, in welcher der Stift (10) angeordnet ist, wobei das Gehäuse auf dem Stift (10) verschiebbar montiert ist und die Kopfstütze des Weiteren Mittel zur Blockierung (11) der Verschiebung des Gehäuses (6) in Bezug auf das Tragelement (3) und/oder des Gehäuses (6) in Bezug auf den Stift (10) umfasst, und dadurch, dass die Mittel zur Blockierung (11) der Verschiebung des Gehäuses (6) in Bezug auf das Tragelement (3) eine Zahnstange (12) umfassen, die mit dem Tragelement (3) fest verbunden ist, und die sich gemäß einer Richtung erstreckt, die im Wesentlichen parallel zur Achse (A) verläuft, wobei die Mittel zur Blockierung (11) des Weiteren ein Teil zum Zusammenwirken (13) mit der Zahnstange (12) umfassen, wobei das Teil mit dem Gehäuse (6) fest verbunden ist, wobei das Teil drehbar ist zwischen einer Einstellposition, in welcher es von der Zahnstange (12) entfernt ist und die Verschiebung des Gehäuses (6) in Bezug auf das Tragelement (3) ermöglicht, so dass die Höheneinstellung der Kopfstütze (1) ermöglicht wird, und einer Blockierposition, in welcher es mit der Zahnstange (12) zusammenwirkt und die Verschiebung des Gehäuses (6) in Bezug auf das Tragelement (3) blockiert, so dass die Höhe der Kopfstütze (1) festgestellt wird, wobei die Länge der Zahnstange (12) den Bereich der Höheneinstellung der Kopfstütze (1) definiert.

2. Kopfstütze nach Anspruch 1, **dadurch gekennzeichnet, dass** sie des Weiteren ein Mittel zum Lösen (14) der Mittel zur Blockierung (11) umfasst, so dass die Verschiebung des Gehäuses (6) in Bezug auf das Tragelement (3) und auf den Stift (10) freigegeben wird.

3. Kopfstütze nach Anspruch 2, **dadurch gekennzeichnet, dass** das Mittel zum Lösen (14) der Mittel zur Blockierung (11) einen Druckknopf (15) umfasst, der in der Nähe der Außenwand des Schaumkörpers angeordnet ist, wobei der Druckknopf angeordnet ist, um die Drehung des Teils zum Zusammenwirken (13) in seine Einstellposition zu bewirken, sobald er betätigt wird, wobei die Mittel zur Blockierung (11) der Verschiebung des Gehäuses (6) in Bezug auf das Tragelement (3) des Weiteren ein Mittel zur Rückstellung des Teils (13) in seine Blockierposition umfassen, wenn der Druckknopf (15) nicht betätigt wird.

4. Kopfstütze nach Anspruch 2 oder 3, **dadurch gekennzeichnet, dass** das Teil (13) des Weiteren in eine Montageposition bewegt werden kann, in welcher es von der Zahnstange (12) entfernt ist und noch unter diese hinuntergehen kann, so dass die Kopfstütze (1) in eine äußerst unterste Position zur Montage gebracht wird.

5. Kopfstütze nach einem der Ansprüche 1 bis 4, **dadurch gekennzeichnet, dass** die Mittel zur Blockierung (11) der Verschiebung des Gehäuses (6) in Bezug auf den Stift (10) Kerben (24), die auf dem Stift (10) vorgesehen sind, und ein Blockierteil (25) umfassen, das mit den Kerben zusammenwirkt, wobei das Teil mit dem Gehäuse (6) fest verbunden ist und drehbar ist zwischen einer Einstellposition, in welcher es von den Kerben (24) entfernt ist, so dass die Höheneinstellung der Kopfstütze (1) ermöglicht wird, und einer Blockierposition, in welcher es mit einer Kerbe (24) zusammenwirkt und die Verschiebung des Gehäuses (6) in Bezug auf den Stift (10) blockiert, so dass die Höhe der Kopfstütze (1) festgestellt wird.

6. Kopfstütze nach Anspruch 5, wenn dieser von Anspruch 2 abhängig ist, **dadurch gekennzeichnet, dass** das Mittel zum Lösen (14) der Mittel zur Blockierung (11) einen Druckknopf (26) umfasst, der in der Nähe der Außenwand des Schaumkörpers angeordnet ist, wobei der Druckknopf angeordnet ist, um die Drehung des Blockierteils (25) in seine Einstellposition zu bewirken, sobald er betätigt wird, wobei das Blockierteil (25) elastisch ist, so dass es in seine Blockierposition zurückkehrt, wenn der Druckknopf (26) nicht betätigt wird.

7. Kopfstütze nach einem der Ansprüche 1 bis 6, **dadurch gekennzeichnet, dass** die erste Aufnahme (7) des Gehäuses (6) eine Form aufweist, die im Wesentlichen komplementär zu jener des Tragelements (3) ist, und dass die zweite Aufnahme (23) eine Form aufweist, die im Wesentlichen komplementär zu jener des Stiftes (10) ist.

8. Kopfstütze nach einem der Ansprüche 1 bis 7, **dadurch gekennzeichnet, dass** das Tragelement (3) ein Einblockteil (8) umfasst, das in einem Kasten angeordnet ist, wobei zwischen dem Einblockteil (8) und dem Kasten Räume vorgesehen sind, so dass das Durchführen funktioneller Elemente des Fahrzeuges durch die Räume ermöglicht wird.

9. Sitz eines Kraftfahrzeuges, umfassend eine Lehne (2) und eine Sitzfläche, **dadurch gekennzeichnet, dass** er eine Kopfstütze (1) nach einem der Ansprüche 1 bis 8 umfasst, wobei die Lehne (2) reversible Mittel zum Festhalten (17) der Kopfstütze umfasst, wobei die Mittel in reversibler Weise mit den reversiblen Mitteln zur Befestigung (4) der Kopfstütze (1) an der Lehne zusammenwirken.

10. Sitz nach Anspruch 9, **dadurch gekennzeichnet, dass** die Mittel zur Befestigung (11) zumindest eine Lasche (18) umfassen, die mit dem Tragelement (3) fest verbunden ist, und die sich im Wesentlichen in längs verlaufender Richtung unter dem Element erstreckt, wobei die Lasche (18) in reversibler Weise mit den Mitteln zum Festhalten (17) der Lehne zusammenwirkt.

11. Sitz nach Anspruch 10, **dadurch gekennzeichnet, dass** das Tragelement einen Druckknopf umfasst, der mit der Lasche (18) fest verbunden ist, wobei der Druckknopf angeordnet ist, um die Lasche (18) von den Mitteln zum Festhalten (17) der Lehne (2) zu lösen, um die Kopfstütze (1) von der Lehne (2) loszulösen.

12. Sitz nach Anspruch 10, **dadurch gekennzeichnet, dass** die Mittel zum Festhalten (17) einen Sockel (19) umfassen, der im oberen Bereich der Lehne (2) vorgesehen ist, wobei das Tragelement (3) auf dem Sockel angeordnet ist, wobei der Sockel ein Festhalteteil (20) umfasst, das verschiebbar ist zwischen einer Festhalteposition, in welcher das Teil mit der Lasche (18) zusammenwirkt, so dass die Kopfstütze (1) an der Lehne (2) befestigt wird, und einer Freigabeposition, in welcher das Teil von der Lasche (18) entfernt ist, so dass die Kopfstütze (1) von der Lehne (2) losgelöst wird.
